# EUROPEAN PATENT SPECIFICATION

(11) **EP 0 919 752 B1**
(45) Date of publication and mention of the grant of the patent: **09.04.2003**
(21) Application number: 98309607.4
(22) Date of filing: 24.11.1998
(51) Int. Cl.: F16K 17/10

(54) **Balanced piston relief valve**
Druckentlastetes Kolbenentlastungsventil
Clapet de détente à piston équilibré

(30) Priority: 28.11.1997 JP 34444297
(43) Date of publication of application: 02.06.1999
(73) Proprietor: NABCO LIMITED, Kobe (JP)
(72) Inventor: Yamamoto, Yoshirhiro, 1-chome, Nishi-ku, Kobe (JP); Ioku, Kensuke, 1-chome, Nishi-ku, Kobe (JP)
(74) Representative: Lerwill, John

(56) References cited:
- JP-A- 56 113 867
- US-A- 3 164 166
- US-A- 3 972 345
- US-A- 4 289 160
- US-A- 4 351 356

## Description

The present invention relates to a balanced piston relief valve for use in controlling pressure in, for example, hydraulic circuits.

### BACKGROUND OF THE INVENTION

Japanese Unexamined Patent Publication (KOKAI) No. SHO 56-113867 discloses a balanced piston relieve valve 1 shown in FIGURE 4. The balanced piston relief valve 1 comprises a main valve element 4, a back pressure chamber 5, a valve port 6, a valve seat 7, an auxiliary valve element 8, a spring 9 and a piston 10. The main valve element 4 selectively opens and closes a communication path between a high pressure circuit 50 and a low pressure circuit 51. Back pressure is introduced into the back pressure chamber 5 from the high pressure circuit 50 through a bore or through-hole 52 in the piston 10. The back pressure introduced into the back pressure chamber 5 tends to urge the main valve element toward its closing position. The back pressure chamber 5 and the low pressure circuit 51 communicate with each other through the valve port 6. The valve seat 7 is provided in association with the valve port 6. The auxiliary valve element 8 selectively engages with and disengages from the valve seat 7 to thereby close and open the valve port 6, respectively. The spring 9 gives the auxiliary valve element 8 force which tends to seat the valve element 8 on the valve seat 7. The piston 10 receives pressure from the high pressure circuit 50 at its one end. The other end of the piston 10 is engageable with the auxiliary valve element 8.

In operation, the auxiliary valve element 8 and the piston 10 are made to engage with each other, and high pressure is applied from the high pressure circuit 50 to the auxiliary valve element 8 so as to disengage it from the valve seat 7. This causes pressurized oil to flow out from the back pressure chamber 5 into the low pressure circuit 51. Then, a pressure difference is generated between the back pressure chamber 5 and the high pressure circuit 50. Due to the pressure difference, the main valve element 4 is opened, and pressurized oil flows out from the high pressure circuit 50 into the low pressure circuit 51, whereby the oil pressure in the high pressure circuit 50 is prevented from exceeding a predetermined pressure.

With the valve element 8 opened and supported on the piston 10, when the spring 9 and the operating fluid flowing through the valve port 6 act on the auxiliary valve element 8, the auxiliary valve element 8 becomes unstable, so that it may swing about the point of support or oscillate together with the piston 10 to repeatedly knock against the peripheral wall of the valve port 6, causing unpleasant noise.

Therefore, an object of the present invention is to provide a balanced piston relief valve which includes an auxiliary valve element prevented from oscillating so as to hardly generate such unpleasant noise as described above.

### SUMMARY OF THE INVENTION

According to the present invention, there is provided means in an area where a piston and an auxiliary valve element contact each other, for radially urging the auxiliary valve element against the wall of a valve port. Because of this means, when the auxiliary valve element is in its open position, it is supported by the piston and a portion of the wall of the valve port, whereby oscillations of the auxiliary valve element in the radial direction can be suppressed.

According to the present invention, a balanced piston relief valve comprises a main valve element which selectively opens and closes a path through which a high pressure section and a low pressure section communicate with each other, a back pressure chamber into which a back pressure tending to urge the main valve element to its closed position is introduced from the high pressure section through a restriction opening, a valve port through which the back pressure chamber communicates with the low pressure section, a valve seat formed in the valve port, an auxiliary valve element which selectively engages and disengages with and from the valve seat to thereby close and open the valve port, a spring urging the auxiliary valve element in the direction to make the auxiliary valve element engage with the valve seat, and a piston which receives pressure from the high pressure section at its one end, and urges by the other end the auxiliary valve element in the direction to disengage the auxiliary valve element from the valve seat. The balanced piston relief valve of the present invention is characterized in that biasing means is provided in an abutment area where the auxiliary valve element and the piston abut against each other, for pressing the auxiliary valve element in the radial direction of the valve port so as to urge the auxiliary valve element against a portion of the wall of the valve port when the auxiliary valve element is off the valve seat.

When the auxiliary valve element is off the valve seat, it is urged against the wall of the valve port and is supported by the piston and the valve port wall. Accordingly, even when working fluid flows through a space between the auxiliary valve element and the valve seat and acts on the auxiliary valve element, the radial movement of the auxiliary valve element is restricted. Therefore, unpleasant noise which is generated by the auxiliary valve element oscillating in the radial direction can be reduced.

The balanced piston relief valve may have a piston, an auxiliary valve element and a spring arranged in such a manner that their longitudinal center axes are in alignment with the same axial line. The biasing means may be provided by arranging the piston and the auxiliary valve element to abut against each other at a location offset from the axial line.

With this arrangement, when the piston presses the auxiliary valve element, the auxiliary valve element receives pressure from the piston at a location offset from the axial line, so that the longitudinal center axis of the auxiliary valve element tilts with respect to the longitudinal center axis of the valve port, and the auxiliary valve element opens, while abutting against the wall of the valve port. The working fluid flowing in a space between the auxiliary valve element and the valve seat acts on the auxiliary valve element, but radial movement of the auxiliary valve element is restricted and, therefore, noise caused by the oscillations of the auxiliary valve element are reduced.

In comparison with an arrangement in which a slope is formed in a spring bracket for a spring urging the auxiliary valve element so that the auxiliary valve element can be urged against the wall of the valve port by the spring through the slope in the spring bracket, the force urging the auxiliary valve element against the valve port wall, according to the present invention, varies little because the auxiliary valve element receives radially acting force directly from the piston. Therefore oscillations of the auxiliary valve element can be efficiently suppressed.

The biasing means may be provided by providing the surface of the piston facing the auxiliary valve element with a slope sloping at an angle with respect to a plane perpendicular to the longitudinal axis of the spring.

The slope formed in the surface of the piston facing the auxiliary valve element can provides force which urges the auxiliary valve element in its radial direction, so that the auxiliary valve element can be supported by the piston and the wall of the valve port, which can reduce oscillations of the auxiliary valve element and, hence, noise caused by such oscillations.

The sloping angle of the slope is preferably from about 10° to about 20° . A smaller sloping angle of the the slope provides a radial force insufficient for the auxiliary valve element to be supported by the piston and the wall of the valve port, whereas a larger sloping angle provides a larger radial force to the auxiliary valve element, which causes the auxiliary valve element to be opened with force smaller than the preset counteracting force given by the spring. As the angle of the slope is larger, the auxiliary valve element is opened with smaller force, so that the amount of ineffectual fluid flowing when the main valve element is still closed increases. The angle of the slope between about 10° and about 20° can reduce the amount of ineffectually flowing fluid and also suppress lateral oscillations of the auxiliary valve element.

The piston and the auxiliary valve element may be made to abut against each other at a location offset from the axial line along which the piston, the auxiliary valve element and the spring urging the auxiliary valve element are aligned, by forming the tip end of the auxiliary valve element at a location offset from the axial line.

With this arrangement, by simply modifying the shape of the tip of the auxiliary valve element, force which urges the auxiliary valve element in the radial direction of the valve port can be produced.

Also, it is preferable to form the piston to have a portion which fits into the valve port and includes a smaller diameter portion and a larger diameter portion. The larger diameter portion provides, together with the wall of the valve port, a choke, i.e. an area-restricted fluid passage, for the auxiliary valve element. The choke for the auxiliary valve element can suppress longitudinal oscillations of the auxiliary valve element which are caused by variations of the pressure in the back pressure chamber. Further, because the choke for the auxiliary valve element is provided by the larger diameter portion of the piston, only a short larger diameter portion can provide the choke. Such a choke short in length can reduce influence of variations in viscosity of the working fluid caused by variations of temperature.

### BRIEF DESCRIPTION OF THE DRAWINGS

FIGURE 1 shows a longitudinal cross-section of a first example of a balanced piston relief valve according to the present invention;
FIGURE 2 is an enlarged view of a portion of the valve shown in FIGURE 1;
FIGURE 3 shows a longitudinal cross-section of a second example of a balanced piston relief valve according to the present invention; and

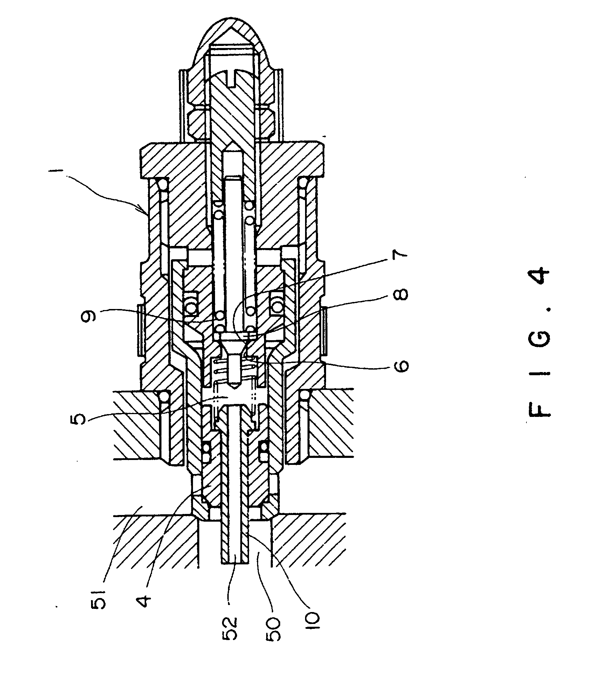

FIGURE 4 shows a longitudinal cross-section of a prior art balanced piston relief valve.

### DETAILED DESCRIPTION OF EMBODIMENT

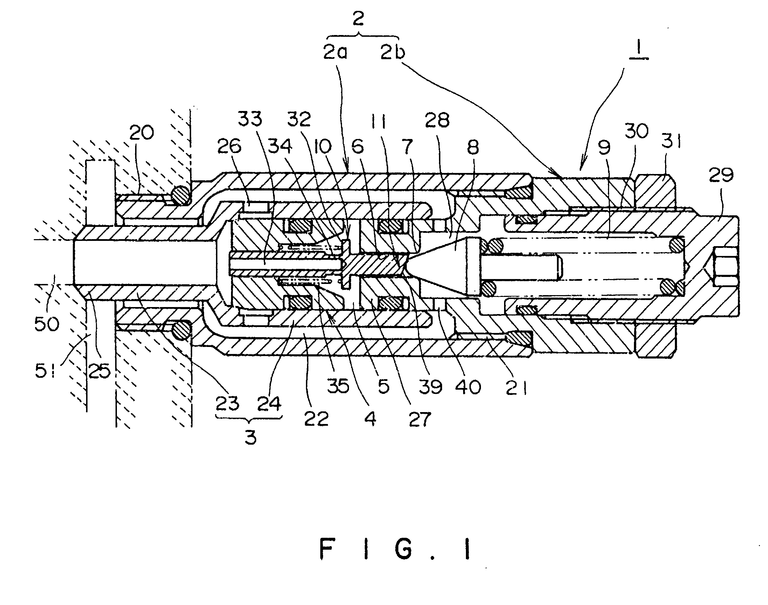

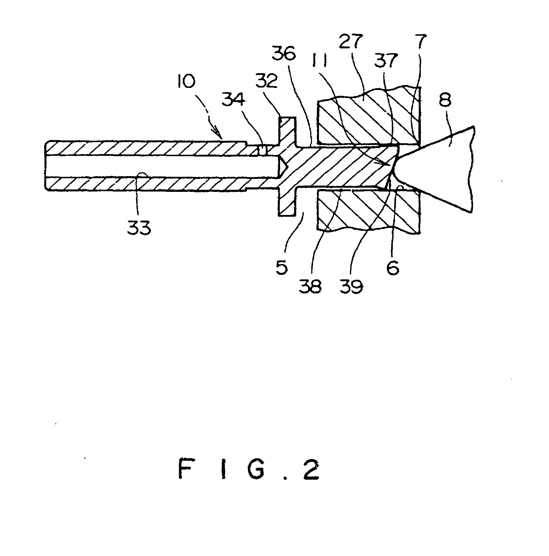

A first example of a balanced piston relief valve according to the present invention is described with reference to FIGURES 1 and 2. A balanced piston relief valve 1 according to the present invention includes an anti-cavitation valve 3, a main valve element 4, a back pressure chamber 5, a valve port 6, a valve seat 7, an auxiliary valve element 8, a spring 9, a piston 10 and biasing means 11, which are all arranged in a main body 2.

The main body 2 includes body members 2a and 2b, as shown in FIGURE 1. The body member 2a comprises a stepped hollow cylinder having a smaller diameter section and a larger diameter section. A male screw 20 is formed on the outer periphery of one end of the smaller diameter section, for mounting the balanced piston relief valve to a system in which the balanced piston relief valve is used. The body member 2b is screwed into an inner screwed bore in the larger diameter section at the other end, as represented by a reference numeral "21". Within the body member 2a, the anti-cavitation valve 3 is disposed with its longitudinal axis aligned with the longitudinal axis of the body member 2a. There is disposed a space 22 between the body member 2a and the anti-cavitation valve 3. The space 22 provides a low-pressure oil path.

The anti-cavitation valve 3 is a valve structure which is so arranged as to prevent cavitation from occurring. The anti-cavitation valve 3 comprises a stepped hollow cylinder including a smaller diameter section 23 and a larger diameter section 24. The small diameter section 23 has an anti-cavitation valve section 25 in one end thereof, and the large diameter section 24 has a plurality of small holes 26 formed to extend through the wall thereof near the step between the small and large diameter sections. The larger diameter section 24 has a bore therein. A coaxial extension 27 of the body member 2b is fitted into the rear portion of the bore in the large diameter section 24 in such a manner that the anti-cavitation valve 3 can slide over the extension 27 in the axial direction. The main valve element 4 is disposed in the front portion of the bore in such a manner that it can slide in the axial direction. The back pressure chamber 5 is formed between the main valve element 4 and the extension 27 of the body member 2b. The main valve element 4 slides in the bore extending through the larger diamter section 24 of the anti-cavitation valve 3 to selectively connect and disconnect the small holes 26, which are in communication with the low pressure circuit, and the bore extending through the small diameter section 23, which are in communication with the high pressure circuit.

A valve chamber 28 is formed in the body member 2b and is in communication with a low pressure path 22 via communication ports 40 in the extension 27. The extension 27 has the axially extending valve port 6, which makes the back pressure chamber 5 communicate with the valve chamber 28. The valve seat 7 is formed on the valve chamber side of the valve port 6. The poppet-type auxiliary valve element 8 or pilot valve having a cone-shape with a spherical head is disposed within the valve chamber 28. The auxiliary valve element 8 is urged to seat against the valve seat 7 by the spring 9. The spring 9 is a coil spring, which sets the pressure to be relieved. The spring 9 is disposed with its longitudinal center axis in alignment with those of the auxiliary valve 8 and the later-mentioned piston 10.

The spring force of the spring 9 is adjusted by a spring force adjusting member 29, which engages with the rear end of the spring 9. The spring force adjusting member 29 is screwed into the rear end of the bore in the body member 2b, as represented by a reference numeral "30". A locking nut 31 locks the member 29.

The piston 10 is disposed to face the front end of the auxiliary valve element 8. The piston 10 has a portion which slidably extends through a longitudinal center bore in the main valve element 4. The front end of the piston 10 extends out of the main valve element 4. The other end portion of the piston 10 extends through the valve port 6 and the rear end is adapted to abut against the head of the valve element 8. A spring receiving flange 32 is formed at an intermediate portion of the piston 10 within the back pressure chamber 5. A longitudinal center bore 33 extends from the front end of the piston 10 to the location where the flange 32 is disposed. The bore 33 communicates with the back pressure chamber 5 via a choke 34. A spring 35 is disposed between the spring receiving flange 32 and the main valve element 4. The spring 35 urges the piston 10 against the head of the auxiliary valve element 8:

A working fluid path is formed on the portion of the piston 10 in the valve port 6 so that the working fluid in the back pressure chamber 5 can flow into the front portion of the valve chamber 28. In the first example, as shown in FIGURE 2, the portion of the piston 10 extending through the valve port 6 is formed to comprise a larger diameter portion 37 in the rear end the piston 10 and a remaining smaller diameter portion 36. The diameter of the portion 37 is such as to permit it to be inserted into and slidable in the valve port 6. When the auxiliary valve element 8 opens, the working fluid in the back pressure chamber 5 should flow into the valve chamber 28 through a path 38 formed between the valve port 6 and the piston 10. The flow rate of the fluid flowing through the path 38 is higher than the flow rate through the choke 34. For that purpose, the diameter of the portion 37 may be adjusted, or the portion 37 may be formed to be short in the axial direction. Alternatively, one or more small notches may be formed in the larger diameter portion 37. Then, a choke for the auxiliary valve element 8 is effectively formed in a portion of the path 38 formed by the valve port 6 and the larger diameter portion 37. Influence of variations in viscosity of the working fluid caused by temperature variations can be reduced by reducing the axial length of the choke.

The biasing means 11 is provided by forming a slope 39 in the end surface of the larger diameter portion 37 of the piston 10 facing the head of the auxiliary valve element 8. The angle of the slope 39 with respect to a plane perpendicular to the axis of the piston 10 is from about 10 ° to about 20° . The slope 39 is adapted to abut against the spherical head of the auxiliary valve element 8.

When the slope 39 presses the head of the auxiliary valve element 8, a radial force acting in the direction perpendicular to the axis of the valve element 8 is produced as a component of the force acting on the valve element 8 in the direction perpendicular to the slope 39. Accordingly, the auxiliary valve element 8 is moved backward and, at the same time, urged against a portion of the inner wall of the valve port 6.

The balanced piston relief valve 1 is used in a manner similar to a prior art balanced piston relief valve with an anti-cavitation valve, and its relieving operation is also similar to that of a prior art balanced piston relief valve.

Specifically, the balanced piston relief valve 1 is mounted to, for example, a direction switching valve system indicated by phantom lines in FIGURE 1, by means of the male screw 20. The direction switching valve system includes a valve seat in a portion where a high pressure circuit 50 opens into a low pressure circuit 51. The anti-cavitation valve section 25 of the anti-cavitation valve 3 is adapted to seat on the valve seat. With the section 25 urged against the valve seat, the working fluid is introduced into the high pressure circuit 50. It makes the valve section 25 to fit on the valve seat, so that the high pressure circuit 50 becomes in fluid communication with the bore in the smaller diameter section 23 of the anti-cavitation valve 3 and is separated from the low pressure circuit 51. In this state, the low pressure path 22 of the balanced piston relief valve 1 is in communication with the low pressure circuit 51 at the male screw side of the body 2.

The relieving operation is as follows.

When the working fluid pressure in the high pressure circuit 50 exceeds the pressure preset by the spring 9, the piston 10 urges the auxiliary valve element 8 to open against the spring force provided by the spring 39, so that the fluid within the back pressure chamber 5 flows out through the valve port 6, the valve seat 7, the valve chamber 28, the communication ports 40 and the low pressure path 22 into the low pressure circuit 51. The flow of the fluid out of the back pressure chamber 5 reduces further the pressure in the chamber 5, which results in the recession of the main valve element 4 in the direction away from the high pressure circuit 50. Then, the main valve element 4 opens to allow the fluid in the high pressure circuit 50 to flow through the small holes 26 and the low pressure path 22 into the low pressure circuit 51.

In the state shown in FIGURES 1 and 2, the auxiliary valve element 8 is opened. In this state, the auxiliary valve element 8 is pressed backward by the slope 39 formed on the piston 10 against the spring force of the spring 9. When the valve element 8 is opened, the slope 39 (i.e. the biasing means 11) urges the auxiliary valve element 8 in the radial direction against a portion of the inner peripheral wall of the valve port 6 on one side thereof. Thus, the auxiliary valve element 8 is stably supported by the two points, namely, by the slope 39 of the piston 10 and the wall of the valve port 6 and keeps its position against force given by the fluid flowing through the valve port 6. Thus, the valve element 8 is prevented from oscillating and, therefore, hardly generates noise. Due to the choke effectively formed in a portion of the path 38 by the valve port 6 and the larger diameter portion 37 of the piston 10, shown in FIGURE 2, pressure variations occurring in the back pressure chamber 5 are transmitted through the choke to the auxiliary valve element 8. Therefore, even if the fluid pressure in the back pressure chamber 5 changes rapidly, such change is attenuated by the choke before it reaches the auxiliary valve element 8, whereby longitudinal oscillations of the auxiliary valve element 8 are suppressed.

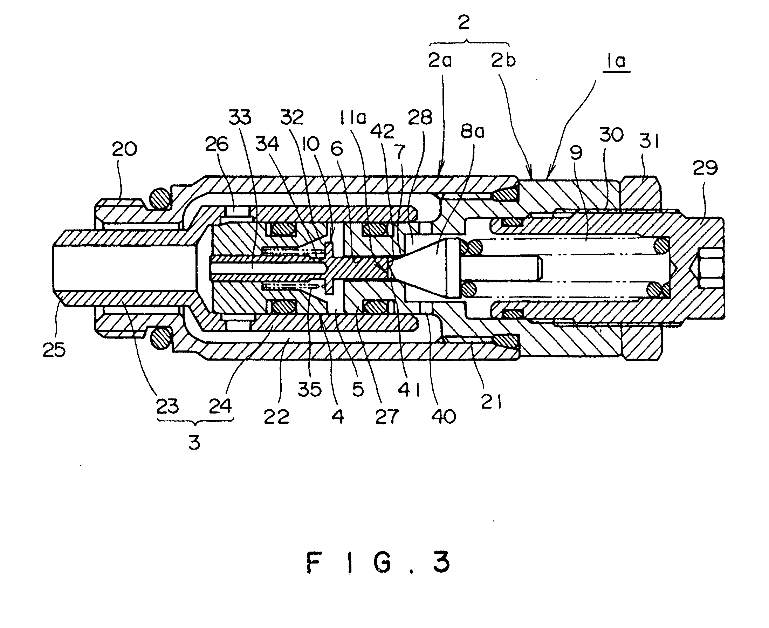

A second example of a balanced piston relief valve according to the present invention is shown in FIGURE 3. A balanced piston relief valve 1a shown in FIGURE 3 has the same structure as the first example shown in FIGURES 1 and 2, except the structure of the biasing means 11a. Accordingly, the same component shown in FIGURES I and 2 are given the same reference numerals as used in FIGURES 1 and 2, and no further description is given to them. The biasing means 11a of the second example comprises a slope 41 in the head of a poppet-type auxiliary valve element 8a and the end surface 42 of the piston 10 facing the auxiliary valve element 8a which is formed perpendicular to the axis of the piston 10. The slope 41 is formed by cutting the head of the valve element 8a slantwise relative to the axis of the valve element 8a, to remove a portion of the head. The head of the auxiliary valve element 8 is cut in such a manner that the resulting head can have such a size as to be enter into the valve port 6 and that the tip of the head can abut against the end surface 42 of the piston 10 at an off-axis point. When the surface of the piston. 10 presses the auxiliary valve element 8a to move backward, the valve element 8a is tilted and urged against the wall of the valve port 6 on one side thereof.

With the above-described biasing means 11a, when the auxiliary valve element 8a is opened, it is tilted and urged against a portion of the wall of the valve port 6. Thus, it is stably supported by the two points, namely, by the end surface 42 of the piston 10 and the wall of the valve port 6, whereby oscillations which generate noise are suppressed.

## Claims

1. A balanced piston relief valve comprising:
a main valve element (4) for selectively opening and closing a communication path between a high pressure circuit (50) and a low pressure circuit (51),
a back pressure chamber (5) into which back pressure tending to urge said main valve element to a closing position thereof is introduced from said high pressure circuit via a choke (34);
a valve port (6) through which said back pressure chamber is in communication with said low pressure circuit;
a valve seat (7) formed in said valve port;
an auxiliary valve element (8;8a) selectively engaging with and disengaging from said valve seat to close and open said valve port;
a spring (9) pressing said auxiliary valve element to engage with said valve seat; and
a piston (10) having a first end receiving pressure from said high pressure circuit, and having a second end adapted to urge said auxiliary valve element to disengage from said valve seat;
**characterized in that** biasing means (11; 11a) is provided in an abutment area where said auxiliary valve element (8) and said piston (10) abut against each other, for pressing said auxiliary valve element in a radial direction so as to urge said auxiliary valve element against a portion of a wall of said valve port (6) when said auxiliary valve element is disengaged from said valve seat (7).

2. The balanced piston relief valve according to Claim 1 wherein longitudinal axes of said piston (10), said auxiliary valve element (8) and said spring (9) are in alignment with a same axial line, **characterized in that** said biasing means (11; 11a) is provided by placing said abutment area off said axial line.

3. The balanced piston relief valve according to Claim 1 **characterized in that** said biasing means (11) is provided by providing a surface of said piston (10) abutting against said auxiliary valve element (8) with a slope (39) forming a sloping angle with respect to a plane perpendicular to the longitudinal axis of said spring (9).

4. The balanced piston relief valve according to Claim 3 **characterized in that** said sloping angle is from about 10 degrees to about 20 degrees.

5. The balanced piston relief valve according to Claim 2 **characterized in that** a tip end of said auxiliary valve element (8) is formed at a location off said axial line, whereby said abutment area is placed off said axial line.

6. The balanced piston relief valve according to any one of Claims 1, 2, 3, 4 and 5 wherein said piston (10) has a portion fitted into said valve port (6), **characterized in that** said portion of said piston has a section (36) having a small diameter and a section (37) having a large diameter, and that a choke for said auxiliary valve element (8) is formed between the peripheral surface of said large diameter section and the wall of said valve port.

## Patentansprüche

1. Ausgeglichenes Kolbenüberdruckventil, umfassend:
ein Hauptventilelement (4) zum selektiven Öffnen und Schließen eines Kommunikationswegs zwischen einem Hochdruckkreis (50) und einem Niederdruckkreis (51)
eine Gegendruckkammer (5), in die Gegendruck, der zum Drängen des genannten Hauptventilelements in eine Schließstellung von ihm tendiert, über eine Drossel (34) aus dem genannten Hochdruckkreis eingeführt wird,
eine Ventilöffnung (6), durch die die genannte Gegendruckkammer mit dem genannten Niederdruckkreis in Kommunikation ist,
einen in der genannten Ventilöffnung gebildeten Ventilsitz (7),
ein Hilfsventilelement (8, 8a), das zum Schließen und Öffnen der genannten Ventilöffnung selektiv mit dem genannten Ventilsitz in Eingriff kommt und von ihm abgehoben wird,
eine Feder (9), die das genannte Hilfsventilelement zum Ineingriffkommen mit dem genannten Ventilsitz presst, und
einen Kolben (10) mit einem ersten Ende, das Druck aus dem genannten Hochdruckkreis erhält, und einem zweiten Ende zum Drängen des genannten Hilfsventilelements zum Abheben vom genannten Ventilsitz;
**dadurch gekennzeichnet, dass** sich in einem Stoßbereich, in dem das genannte Hilfsventilelement (8) und der genannte Kolben (10) aneinander anstoßen, eine Vorspannungseinrichtung (11, 11a) befindet zum Pressen des genannten Hilfsventilelements in einer radialen Richtung, um das genannte Hilfsventilelement gegen einen Teil einer Wandung der genannten Ventilöffnung (6) zu drängen, wenn das genannte Hilfsventilelement von dem genannten Ventilsitz (7) abgehoben wird.

2. Ausgeglichenes Kolbenüberdruckventil nach Anspruch 1, bei dem Längsachsen des genannten Kolbens (10), des genannten Hilfsventilelements (8) und der genannten Feder (9) mit einer gleichen axialen Linie fluchten, **dadurch gekennzeichnet, dass** die genannte Vorspannungseinrichtung (11, 11a) bereitgestellt wird, indem der genannte Stoßbereich von der axialen Linie versetzt angeordnet wird.

3. Ausgeglichenes Kolbenüberdruckventil nach Anspruch 1, **dadurch gekennzeichnet, dass** die genannte Vorspannungseinrichtung (11) durch Versehen einer Oberfläche des genannten Kolbens (10), die an das genannte Hilfsventilelement (8) anstößt, mit einer Schrägung (39), die einen Neigungswinkel mit Bezug auf eine zur Längsachse der genannten Feder (9) senkrechten Ebene bildet, versehen ist.

4. Ausgeglichenes Kolbenüberdruckventil nach Anspruch 3, **dadurch gekennzeichnet, dass** der genannte Neigungswinkel von ungefähr 10 Grad bis ungefähr 20 Grad beträgt.

5. Ausgeglichenes Kolbenüberdruckventil nach Anspruch 2, **dadurch gekennzeichnet, dass** ein Spitzenende des genannten Hilfsventilelements (8) an einer von der genannten axialen Linie versetzten Stelle gebildet ist, wodurch der genannte Stoßbereich von der genannten axialen Linie versetzt angeordnet ist.

6. Ausgeglichenes Kolbenüberdruckventil nach einem der Ansprüche 1, 2, 3, 4 und 5, bei dem ein Teil des genannten Kolbens (10) in die genannte Ventilöffnung (6) eingepasst ist, **dadurch gekennzeichnet, dass** der genannte Teil des genannten Kolbens einen Abschnitt (36) mit einem kleinen Durchmesser und einen Abschnitt (37) mit einem großen Durchmesser hat und dass zwischen der Umfangsfläche des genannten Abschnitts großen Durchmessers und der Wandung der genannten Ventilöffnung eine Drossel für das genannte Hilfsventilelement (8) gebildet wird.

## Revendications

1. Une soupape de sûreté à piston équilibré comprenant :
un élément (4) formant soupape principale pour ouvrir et fermer sélectivement une voie de communication entre un circuit haute pression (50) et un circuit basse pression (51) ;
une chambre de contre-pression (5) dans laquelle est introduite depuis ledit circuit haute pression, par l'intermédiaire d'un étranglement (34), une contre-pression qui tend à pousser ledit élément formant soupape principale vers une position de fermeture de cet élément ;
un orifice (6) de soupape à travers lequel ladite chambre de contre-pression communique avec ledit circuit basse pression ;
un siège (7) de soupape formé dans ledit orifice de soupape ;
un élément (8; 8a) formant soupape auxiliaire qui s'engage sélectivement avec ledit siège de soupape et se dégage de celui-ci pour fermer et ouvrir ledit orifice de soupape ;
un ressort (9) qui appuie sur ledit élément formant soupape auxiliaire pour causer un engagement avec ledit siège de soupape ; et
un piston (10) ayant une première extrémité qui reçoit une pression provenant dudit circuit haute pression, et ayant une deuxième extrémité adaptée pour pousser ledit élément formant soupape auxiliaire pour le dégager dudit siège de soupape ;
**caractérisée en ce que** des moyens de rappel (11; 11a) sont prévus dans une zone de butée dans laquelle ledit élément (8) formant soupape auxiliaire et ledit piston (10) butent l'un contre l'autre, pour presser ledit élément formant soupape auxiliaire dans une direction radiale de sorte à pousser ledit élément formant soupape auxiliaire contre une partie dune paroi dudit orifice de soupape (6) lorsque ledit élément formant soupape auxiliaire est dégagé dudit siège de soupape (7).

2. La soupape de sûreté à piston équilibré selon la revendication 1 dans laquelle les axes longitudinaux dudit piston (10), dudit élément (8) formant soupape auxiliaire et dudit ressort (9) sont alignés sur une même ligne médiane, **caractérisée en ce que** lesdits moyens de rappel (11; 11a) sont réalisés en décalant ladite zone de butée relativement à ladite ligne médiane.

3. La soupape de sûreté à piston équilibré selon la Revendication 1, **caractérisée en ce que** lesdits moyens de rappel (11) sont réalisés en prévoyant une surface dudit piston (10) qui bute contre ledit élément (8) formant soupape auxiliaire avec une pente (39) qui forme un angle incliné relativement à un plan perpendiculaire à l'axe longitudinal dudit ressort (9).

4. La soupape de sûreté à piston équilibré selon la Revendication 3, **caractérisée en ce que** ledit angle incliné est compris entre 10 degrés environ et 20 degrés environ.

5. La soupape de sûreté à piston équilibré selon la Revendication 2, **caractérisée en ce qu'**un sommet dudit élément (8) formant soupape auxiliaire est formé en un point décalé relativement à ladite ligne médiane de sorte que ladite zone de butée est décalée relativement à ladite ligne médiane.

6. La soupape de sûreté à piston équilibré selon l'une quelconque des revendications 1, 2, 3, 4 ou 5, dans laquelle ledit piston (10) a une partie adaptée dans ledit orifice de soupape (6), **caractérisée en ce que** ladite partie dudit piston présente une section (36) à petit diamètre et une section (37) à gros diamètre, et qu'un étranglement pour ledit élément (8) formant soupape auxiliaire est formé entre la surface périphérique de ladite section à gros diamètre et la paroi dudit orifice de soupape.
